# EUROPÄISCHE PATENTSCHRIFT

(11) **EP 2 952 328 B1**
(45) Veröffentlichungstag und Bekanntmachung des Hinweises auf die Patenterteilung: **28.02.2018**
(21) Anmeldenummer: 15169609.3
(22) Anmeldetag: 28.05.2015
(51) Int. Cl.: B29C 49/12, B29C 49/56, B29C 49/06, B29C 49/48, B29C 49/28, B29C 49/36

(54) **BLASFORMEINRICHTUNG MIT VORSPANNBARER BEFESTIGUNG FÜR BLASFORMEN SOWIE VERFAHREN ZUM UMFORMEN VON KUNSTSTOFFVORFORMLINGEN**
BLOW MOULDING MACHINE WITH PRETENSIONABLE FIXING FOR BLOW MOULDS AS WELL AS METHOD FOR RESHAPING PREFORMS
DISPOSITIF DE MOULAGE PAR SOUFFLAGE DOTÉ D'UNE FIXATION POUVANT ÊTRE MISE EN PRÉCONTRAINTE POUR LE MOULE DE SOUFFLAGE ET PROCÉDÉ DE TRANSFORMER PRÉFORMES

(30) Priorität: 28.05.2014 DE 102014107512
(43) Veröffentlichungstag der Anmeldung: 09.12.2015
(73) Patentinhaber: Krones AG, 93073 Neutraubling (DE)
(72) Erfinder: Geltinger, Florian, 93073 Neutraubling (DE); Lindner, Maria, 93073 Neutraubling (DE); Philipp, Thomas, 93073 Neutraubling (DE); Brinster, Paul, 93073 Neutraubling (DE)
(74) Vertreter: Bittner, Bernhard

(56) Entgegenhaltungen:
- EP-A1- 1 880 826
- DE-A1-102009 050 637
- FR-A1- 2 790 703

## Beschreibung

Die vorliegende Erfindung bezieht sich auf eine Vorrichtung zum Umformen von Kunststoffvorformlingen zu Kunststoffbehältern. Derartige Vorrichtungen und entsprechende Herstellungsverfahren sind aus dem Stand der Technik seit langem bekannt. Dabei wird üblicherweise ein erwärmter Kunststoffvorformling in eine Blasform eingegeben und innerhalb dieser Blasform durch Beaufschlagung mit Druckluft expandiert. Die jeweilige Blasform bzw. eine Innenwandung derselben bestimmt dabei durch ihre Kontur die Kontur des zu fertigenden Behältnisses. Bei der Umstellung auf andere Behältnisse sind damit üblicherweise auch die Blasformen selbst einzuwechseln. Dieser Einwechselvorgang ist dabei relativ zeitaufwendig.

Üblicherweise werden die Blasformteile noch an Blasformträgerschalen gehalten und diese Trägerschalen wiederum werden an Blasformträgern gehalten. Teilweise sind bei der Umstellung auf unterschiedliche Behältnisformate auch die erwähnten Trägerschalen einzuwechseln. Auch dies stellt einen aufwendigen Prozess dar.

Bei manchen aus dem Stand der Technik bekannten Umformungseinrichtungen zur Umformung von Kunststoffvorformlingen zu Kunststoffbehältnissen werden weiterhin sogenannte Druckkissen eingesetzt, welche während des Blasvorgangs die beiden Blasformteile aufeinander zu pressen, um so dem während des Blasvorgangs entstehenden Innendruck entgegenzuwirken. Dabei werden derartige Druckkissen üblicherweise während des Blasvorgangs mit Druckluft beaufschlagt, um diesen Zustellvorgang zu bewirken. Ein Problem während der Prozesse ist oftmals die Rückführung nach dem erfolgten Blasprozess.

Der vorliegenden Erfindung liegt daher die Aufgabe zugrunde, eine Umformungseinrichtung zum Umformen von Kunststoffvorformlingen zu Kunststoffbehältnissen und insbesondere Kunststoffflaschen zur Verfügung zu stellen, welche einerseits mit geringem Zeitaufwand umgestellt werden kann, welche jedoch andererseits auch einen Zustellvorgang der beiden Blasformteile aufeinander zu während des Blasformvorgangs (bzw. auch eine Rückstellung wenigstens eines Blasformteils nach dem Umformungsvorgang) ermöglicht, bzw. vereinfacht. Diese Aufgabe wird erfindungsgemäß durch den Gegenstand des unabhängigen Patentanspruchs erreicht. Vorteilhafte Ausführungsformen und Weiterbildungen sind Gegenstand der Unteransprüche.

Eine erfindungsgemäße Umformungseinrichtung zum Umformen von Kunststoffvorformlingen zu Kunststoffbehältnissen weist eine Blasformeinrichtung auf, welche wiederum einen Hohlraum ausbildet, innerhalb dessen die Kunststoffvorformlinge durch Beaufschlagung mit einem fließfähigen Medium zu den Kunststoffbehältnissen umformbar sind. Dabei weist die Blasformeinrichtung wenigstens zwei Seitenteile auf, welche wiederum an den Blasformträgern (insbesondere mittelbar) angeordnet sind. Dabei sind an den Blasformträgern mittels einer Befestigungseinrichtung zumindest mittelbar die Seitenteile der Blasform angeordnet.

Erfindungsgemäß weist die Befestigungseinrichtung auch ein Rückstellmittel auf, welches wenigstens zeitweise während eines Arbeitsbetriebs wenigstens ein Seitenteil in Richtung desjenigen Blasformträgers, an dem dieses Seitenteil angeordnet ist, drängt (bzw. eine entsprechende Zustellbewegung bzw. Rückstellbewegung bewirkt).

Grundsätzlich ist es möglich, dass die Blasform bzw. deren Seitenteile direkt an einem Träger angeordnet sind. Es wäre jedoch auch möglich, dass an dem Träger eine Blasformträgerschale angeordnet ist und an dieser Blasformträgerschale wiederum das Seitenteil. Die Erfindung ist auf beide Ausgestaltungen anwendbar. Im Folgenden werden diese beiden Ausgestaltungen teilweise gemeinsam behandelt.

Damit ist dieses Rückstellmittel insbesondere dazu geeignet und/oder bestimmt, diese Rückstellbewegung des Blasformteils auf den Blasformträger zu bewirken. Vorteilhaft handelt es sich bei dem Rückstellmittel um ein elastisches Element. Mit anderen Worten übt damit dieses Rückstellmittel eine Kraft aus, welche das Seitenteil und/oder die Blasformträgerschale in Richtung des Blasformträgers, an dem die Blasformträgerschale mit dem Seitenteil angeordnet ist, drängt bzw. zurückstellt.

Es wird daher insbesondere vorgeschlagen, dass die Befestigungseinrichtung eine Doppelfunktion erfüllt, welche neben der Befestigung selbst auch die Rückführung eines Blasformteils und/oder eines Trägerschalenteils nach dem eigentlichen Expansionsvorgang umfasst.

Die besagte Bewegungsrichtung, in der das Blasformteil oder das Blasformträgerschalenteil gegenüber dem Blasformträger bewegt wird, liegt vorzugsweise in einer Transportebene der Behältnisse während des Umformungsvorgangs. Bevorzugt verläuft diese Bewegungsrichtung senkrecht zu einer Längsrichtung des zu expandierenden Behältnisses.

Zur Expansion der Kunststoffvorformlinge werden zunächst die beiden Seitenteile der Blasform auseinandergeklappt, anschließend die Kunststoffvorformlinge eingebracht, anschließend die Blasform wieder verschlossen und schließlich werden die Kunststoffvorformlinge innerhalb der Blasform expandiert. Die Bewegungsrichtung der besagten Rückstellbewegung liegt bevorzugt in derjenigen Ebene, in der auch die Seitenteile geschwenkt werden, um die Blasform zu öffnen und zu schließen.

Bei einer bevorzugten Ausführungsform ist eine Vielzahl der besagten Umformungseinrichtungen an einen beweglichen Träger angeordnet und wird mittels dieses Trägers transportiert. Bevorzugt handelt es sich bei dem Träger um ein Blasrad, an dem eine Vielzahl von Umformungseinrichtungen angeordnet ist.

Bei einer weiteren vorteilhaften Ausführungsform weist die Umformungseinrichtung einen stangenartigen Körper, insbesondere eine Reckstange auf, der in das Innere der Kunststoffvorformlinge einführbar ist, um diese in ihrer Längsrichtung zu dehnen.

Bei einer weiteren vorteilhaften Ausführungsform weist die Umformungseinrichtung auch eine Beaufschlagungseinrichtung auf, welche die Kunststoffvorformlinge mit dem gasförmigen Medium beaufschlagt, um sie so zu expandieren. Bei dieser Beaufschlagungseinrichtung handelt es sich dabei insbesondere um eine sogenannte Blasdüse, die an eine Mündung der Kunststoffvorformlinge anlegbar ist, um sie so mit dem gasförmigen Medium zu beaufschlagen.

Bei einer weiteren vorteilhaften Ausführungsform weist die Umformungseinrichtung eine Zustelleinrichtung auf, welche dazu geeignet und bestimmt ist, wenigstens zeitweise vor oder während des Umformungsvorgangs ein Seitenteil in Richtung des anderen Seitenteils zuzustellen bzw. zu drängen. Bevorzugt weist die Zustelleinrichtung dabei ein sogenanntes Druckkissen auf, welches beispielsweise und bevorzugt zwischen dem Blasformträger und der Blasformträgerschale oder zwischen dem Blasformträger und dem Blasformteil angeordnet ist. Durch Beaufschlagung dieses Druckkissens bzw. Bereichs mit einem fließfähigen Medium und insbesondere mit Druckluft, können die am Formträger angeordneten Blasformteile (unmittelbar) oder die an der Formträgerschale angeordneten Blasformteile (mittelbar) aufeinander zubewegt bzw. gepresst werden. Auf diese Weise kann ein Spalt zwischen den bewegten Teilen (entweder den Blasformen oder den Formträgerschalen) verringert werden. Dieser unerwünschte Spalt würde bei dem formgeblasenen Behältnis eine Naht in der Behälterwandung verursachen.

Bei einer weiteren vorteilhaften Ausführungsform weist daher die Zustelleinrichtung in wenigstens einem Zwischenraum zwischen dem Blasformträger und dem diesem zugeordneten Seitenteil einen mit einem fließfähigen Medium beaufschlagbaren Aufnahmeraum auf, durch dessen Beaufschlagung der Blasformträger und das ihm zugeordnete Seitenteil auseinanderdrängbar sind. Vorteilhaft handelt es sich hierbei um einen Aufnahmeraum, der mit einem fließfähigen, insbesondere mit einem gasförmigen Medium beaufschlagbar ist. Es wäre jedoch auch möglich, dass dieses Auseinanderdrängen über magnetische Kräfte erfolgt. Vorteilhaft ist dabei dieser Aufnahmeraum zwischen dem Blasformträger und der Blasformträgerschale (dies ist bevorzugt) und/oder zwischen der Blasformträgerschale und dem Blasformteil angeordnet.

Bei einer weiteren vorteilhaften Ausführungsform ermöglicht die Befestigungseinrichtung in einem Arbeitsbetrieb der Umformungseinrichtung ein mechanisches Spiel zwischen dem Blasformträger und dem an diesen Blasformträger angeordneten Blasformteil. Wie oben erwähnt, ist dabei insbesondere (aber nicht zwingend) zwischen dem Blasformteil und dem Blasformträger die besagte Blasformträgerschale angeordnet. Entsprechend kann die besagte Relativbewegung bzw. das mechanische Spiel sowohl zwischen dem Blasformteil und der Blasformträgerschale als auch zwischen der Blasformträgerschale und dem Blasformträger gegeben sein (oder aber auch unmittelbar zwischen dem Blasformträger und dem Blasformteil, falls keine Blasformträgerschale vorhanden ist). Bevorzugt ist dieses mechanische Spiel in einer Richtung gegeben, welche senkrecht zu einer Ebene steht, welche durch eine Verbindungsebene zwischen den beiden Blasformteilen in einem geschlossenen Zustand der Blasformt definiert wird.

Bei einer weiteren vorteilhaften Ausführungsform sind an den Blasformträgern mittels der Befestigungseinrichtung Blasformträgerschalen befestigt und an diesen Blasformträgerschalen sind die Blasformseitenteile angeordnet, wobei das Rückstellmittel bevorzugt wenigstens eine Blasformträgerschale in Richtung desjenigen Blasformträgers, an dem diese Blasformträgerschale angeordnet ist, drängt.

Bei einer bevorzugten Ausführungsform ist eine Blasformträgerschale fest an dem sie haltenden Blasformträger angeordnet (beispielsweise mit diesem verschraubt) und die andere ist bezüglich dem sie haltenden Blasformträger beweglich. Die Blasformträgerschalen ermöglichen die Aufnahme unterschiedlich großer Formen und erleichtern den Austausch der Formen bzw. Formseitenteile. Diese Blasformträgerschalen können Temperierbohrungen aufweisen, die zum Kühlen bzw. Erwärmen (prozessabhängig) der Formen und somit der Flaschen dienen.

Bei einer weiteren bevorzugten Ausführungsform ist wenigstens ein Blasformseitenteil in direktem Kontakt mit einem Druckkissen bzw. dem oben erwähnten mit dem gasförmigen Medium beaufschlagbaren Aufnahmeraum. Bevorzugt kann es sich hierbei im um die linke Formhälfte einer derartigen Blasform handeln. Diese Ausgestaltung kommt insbesondere dann zur Anwendung, wenn kein Blasformträgerschalenteil vorhanden ist. Bevorzugt steht wenigstens ein Seitenteil (und bevorzugt beide Seitenteile) in direktem Kontakt mit dem Blasformträger. Bei dieser Ausführungsform übernimmt daher die Blasform (welche bevorzugt als Vollform ausgeführt ist) auch die Funktion der Formträgerschale.

Bei einer weiteren vorteilhaften Ausführungsform weist wenigstens eine Blasformträgerschale eine dem dieser Blasformträgerschale zugeordneten Blasformträger zugewandte erste Oberfläche auf sowie eine diesem Blasformträger zugewandte zweite Oberfläche und sowohl die erste Oberfläche als auch die zweite Oberfläche begrenzen jeweils ein Druckkissen wenigstens abschnittsweise. Damit sind hier vorteilhaft zwei Druckkissen vorgesehen, die bevorzugt vollständig voneinander getrennt sind. Es wäre jedoch auch möglich, dass zwischen diesen beiden Druckkissen Verbindungskanäle bestehen. Bevorzugt sind Ebenen, in denen diese Oberflächen liegen, schräg zueinander angeordnet und stehen bevorzugt zueinander in einem Winkel, der zwischen 20° und 80°, bevorzugt zwischen 30° und 60° liegt. Die wenigstens eine Befestigungseinrichtung ist bevorzugt zwischen diesen Oberflächen angeordnet. Bevorzugt stehen diese beiden Oberflächen V-förmig zueinander.

Bei einer weiteren vorteilhaften Ausführungsform weist wenigstens ein Rückstellmittel ein Federelement auf. So können beispielsweise an den Befestigungselementen Federelemente vorhanden sein, welche die Blasformträgerschale in Richtung des Blasformträgers zuspannen und/oder das Blasformteil in Richtung des Blasformträgerschalenteils oder des Blasformträgers zuspannen. Das Druckkissen überwindet zusätzlich die durch dieses Federelement aufgebrachte Kraft. Bevorzugt weist die Vorrichtung mehrere derartiger Federelemente auf. Dabei können diese Federelemente jeweils auch Befestigungseinrichtungen zugeordnet sein. Dabei ist es möglich, dass das Federelement um einen Bolzen herum angeordnet ist, der zur Befestigung der Blasformträgerschale dient. Bevorzugt sind beide Blasformteile in der oben beschriebenen Weise an den Blasformträgern angeordnet, wobei es denkbar und bevorzugt ist, dass das oben erwähnte Druckkissen nur einseitig vorhanden ist. Auch das oder die Federelemente, welche die Rückstellung der Blasformträgerschalen auf die Blasformträger bewirken sind daher bevorzugt auch nur einseitig bzw. nur an einem der beiden Blasformträger vorgesehen. Erfindungsgemäß weist die Befestigungseinrichtung ein bajonettartiges Befestigungselement auf, um das Blasformteil an dem Blasformträgerteil zu befestigen. Diese bajonettartige Verbindung erlaubt es daher bevorzugt, eine Befestigung zu erreichen und zugleich jedoch auch ein Vorspannen des erwähnten Federelements.

Dabei können an jedem der beiden Blasformträger zwei der oben beschriebenen Befestigungseinrichtungen vorhanden sein. Bevorzugt sind diese Befestigungseinrichtungen in einer Längsrichtung der Kunststoffvorformlinge übereinander angeordnet. Zum Wechsel muss daher für jede Seite zweimal entriegelt werden.

Bevorzugt ist es möglich, dass ein Befestigungselement, etwa in Form eines Bolzens durch ein Werkzeug oder einen Hebel gedreht wird. Durch die Drehbewegung wird bevorzugt eine Rastposition eines weiteren Befestigungselements, etwa eines unten genauer beschriebenen Zylinderstifts, der quer im Bolzen befestigt ist, im Bajonett verlassen und der Formschluss zwischen dem Stift und der bajonettartigen Kontur aufgehoben. Die Blasformträgerschale kann dann entnommen werden. Das Bajonett bleibt (fest) an der Blasformträgerschale, die Feder der Bolzen und der Stift an dem Blasformträger. Die oben beschriebenen Federelemente übernehmen vorteilhaft zwei Aufgaben, nämlich die Rückholung bzw. Rückstellung des Druckkissens (dies jedoch bevorzugt nur auf einer Formträgerseite, z.B. der linken Formträgerseite) und die mechanische Vorspannung des Stifts in der Bajonettkontur.

Bei einer weiteren vorteilhaften Ausführungsform ist die Befestigungseinrichtung wenigstens der Formträgerschale, ggfs. auch sowohl die Befestigungseinrichtung der Formträgerschale als auch der Blasform bzw. des Blasformteils automatisiert betätigbar. Bevorzugt kann dabei diese Betätigung über eine zentrale Steuerung erfolgen. Auf diese Weise ist es möglich, dass steuerungsseitig ein Lösen der Blasformen eingeleitet werden kann. Dies ist insbesondere auch in Verbindung mit Wechseleinrichtungen wie etwa Wechselrobotern interessant, welche einen automatischen Wechsel von Blasformteilen durchführen können.

Bei einer weiteren vorteilhaften Ausführungsform wird eine Betätigung der Befestigungseinrichtung pneumatisch erzeugt. Dabei ist es weiterhin auch möglich, dass diese Betätigung für einzelne Umformungsstationen, die wie oben erwähnt an den Träger angeordnet sind, erfolgen können. Auf diese Weise können die Betätigungen der Befestigungseinrichtungen stationsbezogen erfolgen.

Bei einer weiteren vorteilhaften Ausführungsform ist es auch möglich, dass die Betätigung der Befestigungseinrichtung separat für die Formträgerschale und das Blasformteil durchgeführt wird.

Bei einer weiteren vorteilhaften Ausführungsform ist es denkbar, dass die Betätigung der Fixierung des Blasformteils auch mit einer Betätigung einer Fixierung des Bodens gekoppelt ist. Bevorzugt weist also die Blasform neben den erwähnten zwei Seitenteilen auch ein Bodenteil auf, welches zum Ausformen eines Behältnisbodens geeignet ist. Bevorzugt ist auch dieses Bodenteil der Blasform an einem Träger fixiert. Dabei ist es auch möglich, dass auch hier eine Befestigungseinrichtung vorgesehen ist, welche automatisch gelöst oder geschlossen werden kann.

Bei einer weiteren vorteilhaften Ausführungsform ist es auch möglich, eine betätigte Stellung der Befestigungseinrichtung bzw. die Fixiermechanismen steuerungsseitig abzufragen, insbesondere abzufragen, ob eine gesperrte bzw. befestigte Stellung gegeben ist oder eine geöffnete bzw. gelockerte.

Bei einer weiteren vorteilhaften Ausführungsform erstreckt sich eine Befestigungseinrichtung, welche das Blasformteil an dem Blasformträger anordnet, durch wenigstens einen Abschnitt der Blasformträgerschale hindurch. Auf diese Weise können sowohl das Blasformteil als auch das Blasformträgerschalenteil an den Trägern angeordnet werden. Vorteilhaft greift dabei ein Bajonettelement des Befestigungselements in ein Blasformteil ein.

Bei einer weiteren vorteilhaften Ausführungsform ist die Blasformträgerschale form- und kraftschlüssig an dem Blasformträger gehalten und/oder hält die Formträgerschale auch das Blasformteil form- und kraftschlüssig. Bevorzugt ist sowohl der Halt der Blasformträgerschale an dem Blasformträger kraft- und formschlüssig als auch der Halt des Blasformteils an der Blasformträgerschale.

Bei einer weiteren vorteilhaften Ausführungsform weist wenigstens eine Blasformträgerschale und weisen bevorzugt beide Blasformträgerschalen Kanäle zum Leiten eines Temperiermediums auf. Auf diese Weise ist es möglich, die Blasformteile zu temperieren und insb. zu kühlen und damit insbesondere auch eine Wandung, welche mit den Kunststoffmaterialen des herzustellenden Kunststoffbehältnisses in Berührung kommt. Vorteilhaft sind Kupplungseinrichtungen vorgesehen, um einen Medienanschluss an der Blasformträgerschale anzuschließen. Bevorzugt sind wenigstens zwei Kupplungseinrichtungen vorgesehen, mittels derer eine Blasformträgerschale an einen Vorlauf und einen Rücklauf anschließbar bzw. ankuppelbar ist.

Bei diesen Kupplungseinrichtungen handelt es sich bevorzugt um selbstdichtende Kupplungseinrichtungen, insbesondere Kupplungsstecker, die einen Anschluss der Formträgerschale an ein Temperiermedium und insbesondere auch einen Medienkreislauf ermöglichen.

Bei einer weiteren vorteilhaften Ausführungsform erfolgt eine Fixierung der Formträgerschale an dem Blasformträger im Wesentlichen achsmittig. Dabei ist es möglich, durch eine derartige achsmittige bzw. zentrierte Fixierung eine günstige Kräfteverteilung zu erreichen. Unter einer achsmittigen Zentrierung wird dabei verstanden, dass diese Fixierung bevorzugt in einer Symmetrieebene des Blasformteils und/oder des Blasformträgers vorgenommen wird.

Vorteilhaft folgt eine Fixierung der Blasform in der Formträgerschale achsmittig.

Bei einer weiteren bevorzugten Ausführungsform erfolgt wenigstens die Fixierung der Formträgerschale an dem Formträger und/oder die Fixierung der Blasform an der Blasformträgerschale durch einen Energiespeicher. Bei diesem Energiespeicher kann es sich beispielsweise um das oben erwähnte Federelement handeln, welches die Blasformträgerschale und/oder das Blasformteil auf das Blasformträgerteil zuspannt.

Bei einer weiteren vorteilhaften Ausführungsform weist wenigstens eine Formträgerschale wenigstens ein Kraftumlenkungselement auf, welches während eines Umformungsprozesses auftretende Kräfte und insbesondere Axialkräfte an den dieser Formträgerschale zugeordneten Blasformträger ableitet. Bevorzugt kann sich an der Formträgerschale ein Absatz (als Kraftumlenkungselement) befinden bzw. an dieser Formträgerschale ein Absatz angeordnet sein, der nach dem Einlegen der Formträgerschale die aus dem Blasprozess auftretenden Kräfte und insbesondere Axialkräfte an den Blasformträger ableitet. Vorteilhaft erfolgt hierbei eine formschlüssige Ableitung an die Formträgerschale. Vorteilhaft handelt es sich damit bei dem Kraftumlenkungselement um einen Absatz bzw. einen Vorsprung.

Bei einer weiteren vorteilhaften Ausführungsform ist der besagte Absatz derart ausgebildet, dass er (insbesondere bei der Montage) form- und kraftschlüssig an eine Auflagefläche des Blasformträgerteils gedrückt wird.

Bei einer weiteren vorteilhaften Ausführungsform ist zwischen dem Blasformteil bzw. zwischen dem Seitenteil und der Blasformträgerschale eine formschlüssige Verbindung vorhanden. Bevorzugt ist kein mechanisches Spiel zwischen dem Seitenteil und der Blasformträgerschale, an der dieses Seitenteil angeordnet ist, gegeben.

Bei einer weiteren vorteilhaften Ausführungsform weist wenigstens eine Formträgerschale an einer ersten Seite eine V-förmige Kontur auf und an einer zweiten Seite, welche der ersten Seite gegenüberliegt, eine gekrümmte Kontur. Vorteilhaft handelt es sich dabei bei der ersten Seite um eine äußere Seite, das heißt um diejenige Seite der Formträgerschale, die im montierten Zustand dem Blasformträgerteil zugeordnet ist bzw. diesem Blasformträgerteil gegenüberliegt und auf dieses zuweist. Vorteilhaft handelt es sich bei der zweite Seite um eine Innenseite der Blasformträgerschale, welche in einem montierten Zustand dem Blasformteil zugewandt ist. Vorteilhaft handelt es sich bei der gekrümmten Kontur um eine runde, insbesondere um eine kreisrunde Kontur. Auch wäre es möglich, insbesondere wenn keine Blasformträgerschale vorhanden ist, dass das Seitenteil eine V-förmige Außenkontur aufweist. Dabei ist es insbesondere möglich, dass jede Außenseite wenigstens zwei jeweils planare Flächenbereiche aufweist, wobei sich besonders bevorzugt diese Flächenbereiche um mehr als die Hälfte der gesamten rückwärtigen Oberfläche erstrecken.

Wenn keine Blasformträgerschalen vorhanden sind, wäre es auch möglich, dass die Blasformteile also Vollformen ausgebildet sind und Temperierbohrungen bzw. Temperierkanäle aufweisen, welche zum Leiten eines Temperiermediums dienen. Bevorzugt können dabei diese Temperierbohrungen über Medienkopplungen und insbesondere über selbstdichtende Medienkopplungen an Temperierkreisläufe angeschlossen werden. Dabei wäre es möglich, dass Gegenstücke zu diesen Medienkopplungen an dem jeweiligen Blasformträgerteil angeordnet sind. Bei einer weiteren vorteilhaften Ausführungsform sind diese Medienverbindungen automatisch verbindbar bzw. lösbar, etwa beim Einsetzen des Blasformteils an das Trägerteil und/oder beim Einsetzen des Blasformteils an das Blasformträgerschalenteil. Auf diese Weise kann der Einsatz von Wechselrobotern zum Einwechseln der Blasformen ermöglicht werden.

Bei einer weiteren vorteilhaften Ausführungsform ist es möglich, dass die Umformungsstationen eine Führungseinrichtung und insbesondere eine Gleitführung aufweisen, welche auch in der Lage ist, vertikale Kräfte, d.h. Kräfte, die in der Längsrichtung der Kunststoffbehältnisse wirken, aufzunehmen. Derartige Kräfte können beispielsweise durch das Aufsetzen einer Blasdüse entstehen. Diese Führungseinrichtung ist bevorzugt auf derjenigen Seite der Umformungsstationen angeordnet, welche auch das oben erwähnte Druckkissen aufweist.

Bei einer weiteren vorteilhaften Ausführungsform ist wenigstens ein Blasformteil über eine starre Formstütze an dem diesem Blasformteil zugeordneten Blasformträgerteil angeordnet. Bei einer weiteren vorteilhaften Ausführungsform weist eine Blasformeinrichtung bzw. ein Seitenteil wenigstens eine Kontur zum Ausbilden eines Behältnisses auf. Bevorzugt weist wenigstens ein Seitenteil wenigstens zwei derartiger Konturen auf, so dass mittels einer Blasformeinrichtung zwei Behältnisse gleichzeitig geblasen werden können. Daneben könnte das betreffende Seitenteil auch mehr als zwei Konturen ausbilden.

Die vorliegende Erfindung ist weiterhin auf ein Verfahren zum Umformen von Kunststoffvorformlingen zu Kunststoffbehältnissen gerichtet, wobei mittels einer Blasformeinrichtung, welche einen Hohlraum ausbildet, die Kunststoffvorformlinge innerhalb dieses Hohlraums durch Beaufschlagung mit einem fließfähigen Medium zu den Kunststoffbehältnissen umgeformt werden, wobei die Blasformeinrichtung wenigstens zwei Seitenteile aufweist, welche zumindest mittelbar an Blasformträgern angeordnet sind, wobei an den Blasformträgern mittels einer Befestigungseinrichtung die Seitenteile angeordnet sind bzw. werden. Erfindungsgemäß weist die Befestigungseinrichtung auch ein Rückstellmittel auf, welches wenigstens zeitweise während eines Arbeitsbetriebs wenigstens ein Seitenteil (oder, falls vorhanden wenigstens eine Blasformträgerschale) in Richtung desjenigen Blasformträgers, an dem dieses Seitenteil oder diese Blasformträgerschale angeordnet ist, drängt.

Es wird damit auch verfahrensseitig vorgeschlagen, dass die Befestigungseinrichtung auch zur Rückstellung des Blasformträgerschalenteils dient. Bevorzugt wird wenigstens zeitweise während des Expansionsvorgangs ein Seitenteil der Blasform in Richtung des anderen Seitenteils gedrängt. Dies erfolgt bevorzugt unter Verwendung eines fließfähigen und insbesondere eines gasförmigen Mediums. Bevorzugt wird dabei einem Druckkissen, welches sich bevorzugt zwischen der Blasformträgerschale und dem Blasformträger, an dem diese Blasformträgerschale angeordnet ist, Druckluft zugeführt.

Weitere Vorteile und Ausführungsformen ergeben sich aus den beigefügten Zeichnungen. Darin zeigen:
- Fig. 1: Eine schematische Darstellung einer Anlage zum Umformen von Kunststoffvorformlingen zu Kunststoffbehältnissen;
- Fig. 2: eine schematische Darstellung einer Umformungseinrichtung;
- Fig. 3: eine Ansicht einer erfindungsgemäßen Umformungseinrichtung;
- Fig. 4: eine Ansicht der Umformungseinrichtung aus Fig. 3 bei entferntem Blasformträger;
- Fig. 5: eine Darstellung einer Blasformträgerschale;
- Fig. 6: eine Darstellung einer Innenseite eines Blasformträgerteils;
- Fig. 7: eine Detaildarstellung der in Fig. 6 gezeigten Darstellung;
- Fig. 8: eine Detaildarstellung der in Fig. 5 gezeigten Darstellung;
- Fig. 9: eine Schnittdarstellung einer direkt an einem Blasformträger angeordneten Blasform;
- Fig. 10: eine Detailansicht eines Befestigungsmechanismus;
- Fig. 11: eine Darstellung einer an einem Träger angeordneten Umformungseinrichtung;
- Fig. 12a, b: zwei Ausgestaltungen von Blasformeinrichtungen; und
- Fig. 13: eine Darstellung einer Blasform in einer weiteren Ausführungsform.

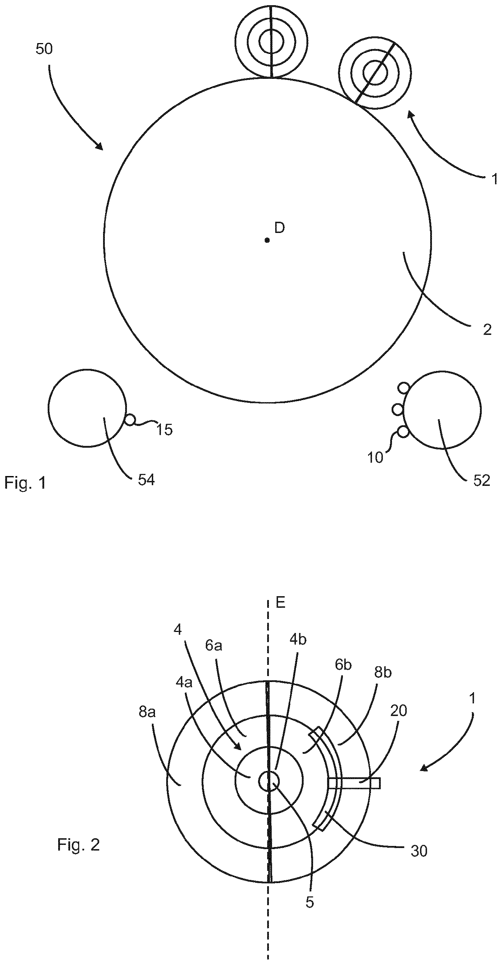

Fig. 1 zeigt eine grob schematische Darstellung einer Anlage 50 zum Umformen von Kunststoffvorformlingen 10 zu Kunststoffbehältnissen 15. Dabei werden über eine Zuführeinrichtung, wie etwa einen Zuführstern 52, die Kunststoffvorformlinge 10 der Umformungseinrichtung zugeführt. Diese Umformungseinrichtung 1 weist dabei einen um eine Drehachse D drehbaren Träger 2 auf, an den eine Vielzahl von Umformungseinrichtungen jeweils am Außenumfang angeordnet ist. Dabei wurden lediglich zwei Umformungseinrichtungen 1 dargestellt. Nach dem Umformungsvorgang werden die so gefertigten Behältnisse 15 über eine Abführeinrichtung, wie einen Abführstern 54, abgeführt.

Fig. 2 zeigt eine schematische Darstellung einer Umformungseinrichtung. Diese weist dabei zwei Blasformträger 8a, 8b auf. An diesen Blasformträgerteilen sind jeweils Blasformträgerschalen 6a, 6b angeordnet und an den Blasformträgerschalen 6a, 6b wiederum Blasformseitenteile 4a, 4b, welche Bestandteile der in ihrer Gesamtheit mit 4 bezeichneten Blasformeinrichtung sind. Zum Öffnen und Schließen der Blasform werden die beiden Blasformträger 8a, 8b gemeinsam mit den an diesen angeordneten Blasformträgerschalen sowie den Blasformteilen auseinandergeklappt, sodass ein Kunststoffvorformling 10 in einen Hohlraum 5, der zwischen den Blasformteilen 4a, 4b ausgebildet wird, eingeführt werden kann. Anschließend wird der Kunststoffvorformling innerhalb dieses Hohlraums expandiert.

Das Bezugszeichen 20 kennzeichnet grob schematisch eine Befestigungseinrichtung, mit der die Blasformträgerschale 6b an dem Blasformträger 8b angeordnet wird. Das Bezugszeichen 30 kennzeichnet ebenfalls grob schematisch ein Druckkissen, welches während des Expansionsvorgangs beispielsweise mit Druckluft gefüllt werden kann, um so das Blasformträgerschalenteil 6b von dem Blasformträgerteil 8b wegzudrängen und um auf diese Weise das an dieser Blasformträgerschale 6b angeordnete Blasformteil 4b auf das Blasformteil 4a zuzustellen.

Wie unter Bezugnahme auf Fig. 2 gezeigt, ist dabei dieses Befestigungselement 20 derart angeordnet, dass es sich senkrecht zu einer Ebene E erstreckt, die im geschlossenen Zustand zwischen den beiden Blasformteilen 4a und 4b gebildet wird. Auch ist das Befestigungselement 20 bezüglich des Blasformträgerteils 8b, bzw. auch bezüglich der Blasformteile 4b mittig angeordnet. Auf diese Weise kann eine zentrale Krafteinleitung erreicht werden. Das Bezugszeichen 5 bezieht sich auf den Hohlraum, innerhalb dessen die Kunststoffvorformlinge zu den Kunststoffbehältnissen expandiert werden.

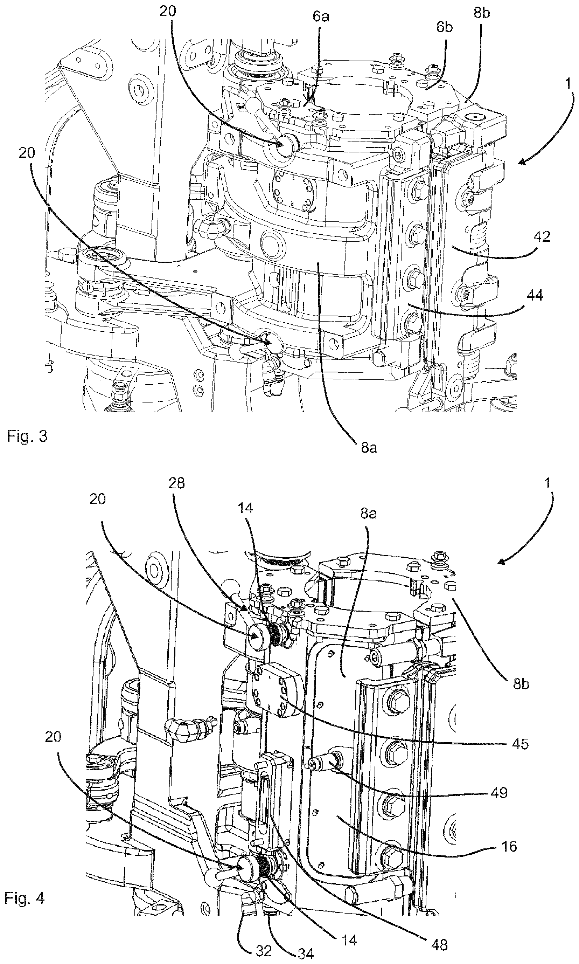

Fig. 3 zeigt eine detailliertere Darstellung einer Umformungseinrichtung 1, wobei hier jedoch die Blasformteile nicht dargestellt sind. An den Blasformträgern 8a, 8b sind jeweils die Blasformträgerschalen 6a, 6b angeordnet. Das Bezugszeichen 42 kennzeichnet ein erstes Verriegelungselement, welches schwenkbar an dem Blasformträgerteil 8b angeordnet ist. Dieses kann in ein weiteres Verriegelungselement 44 eingreifen, um so die Blasform während des Expansionsvorgangs zu verriegeln.

Die Bezugszeichen 20 beziehen sich grob schematisch auf eine Befestigungseinrichtung, mittels derer die Blasformträgerschale 6a an dem Blasformträgerteil 8a befestigt wird. Bei der hier gezeigten vorteilhaften Ausführungsform sind zwei derartige Befestigungseinrichtungen vorgesehen, welche hier übereinander angeordnet sind.

Fig. 4 zeigt eine weitere Darstellung der in Fig. 3 gezeigten Vorrichtung, wobei hier die Blasformträger entfernt wurden, sodass unmittelbar das Blasformträgerschalenteil 6a bzw. 6b sichtbar ist.

Das Bezugszeichen 34 kennzeichnet einen Anschluss, mit denen der Blasformträgerschale 8a ein Temperiermedium zugeführt werden kann. Daneben ist auch ein zweiter Anschluss (nicht gezeigt) zum Rückführen des Temperiermediums vorgesehen. Auch die zweite Blasformträgerschale weist entsprechende Anschlüsse auf.

Das Bezugszeichen 32 kennzeichnet einen Anschluss, mittels dem ein Druckkissen versorgt werden kann. Zu diesem Zwecke ist an dem Blasformträgerschalenteil 6a eine Oberfläche 16 ausgebildet, welche gleichzeitig auch das besagte Druckkissen begrenzt. Damit wird das Druckkissen zwischen dem (in Fig. 4 nicht gezeigten) Blasformträgerteil und dem Trägerschalenteil 6a ausgebildet.

Das Bezugszeichen 14 in Fig. 4 bezieht sich auf ein Federelement, welches zum Vorspannen des Trägerschalenteils 6a in Richtung des Blasformträgerteils 8a dient. Das Bezugszeichen 28 kennzeichnet hier einen Handhebel, mit dem die Arretierung zwischen dem Blasformträgerteil und dem Trägerschalenteil gelöst bzw. verriegelt werden kann.

Das Bezugszeichen 48 bezieht sich auf eine u-förmige Führungseinheit, das Gegenstück dazu ist in der Formträgerschale verschraubt. Das Bezugszeichen 45 bezieht sich auf eine Verriegelungskassette, die die Formträgerschale fixiert und pneumatisch festhält. Die Kassette ist fest an der Formträgerschale verschraubt. Das Bezugszeichen 49 kennzeichnet eine Drossel in der Versorgungsbohrung für das Druckkissen.

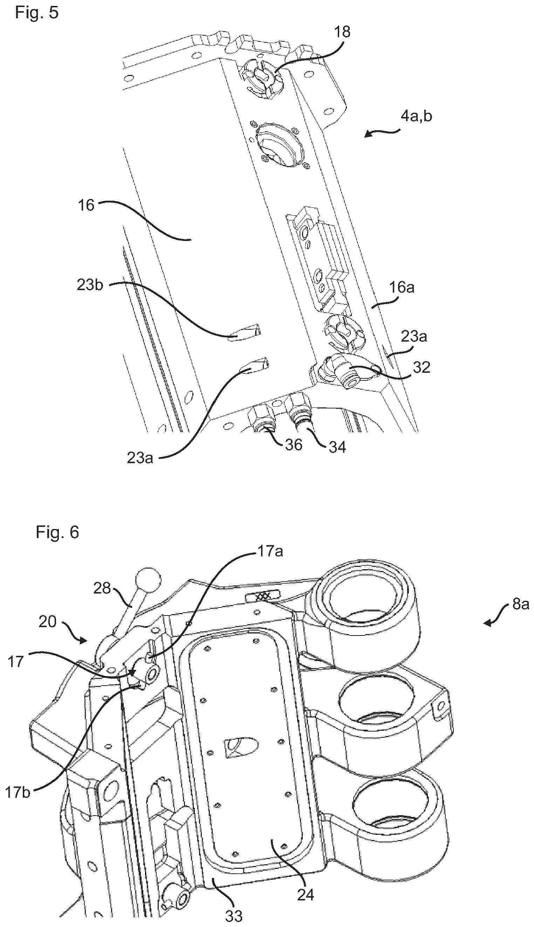

Fig. 5 zeigt eine Darstellung der Blasformträgerschale 6a bzw. 6b. Man erkennt hier wiederum die Anschlüsse 34 und 36 zum Zuführen und Abführen des Temperiermediums. Daneben ist auch der Anschluss 32 erkennbar, über den Luftzufuhr für das Druckkissen erfolgen kann.

Weiterhin sind, wie oben erwähnt, an dem Trägerschalenteil 6a, 6b die Oberflächen 16, 16a ausgebildet, welche auch das Druckkissen ausbilden. Dieses Druckkissen kann über Zuführöffnungen 23a, 23b mit Druckluft versorgt werden.

Man erkennt, dass die Blasformträgerschale 6a, 6b hier eine V-förmige Gestalt aufweist, das heißt die beiden Oberflächen 16, 16a stehen gewinkelt aufeinander. Die Krafteinleitung zum Befestigen der Blasformträgerschale 6a, 6b an dem Blasformträgerteil erfolgt zwischen den beiden Flächen 16, 16a das heißt mittig zwischen diesen Flächen. Zu diesem Zweck dienen die Eingriffsmittel 18a, 18b, welche einen Bestandteil des Bajonetts 18 bilden.

Fig. 6 zeigt eine Darstellung des Blasformträgers 8a. Man erkennt hier wiederum die Befestigungseinrichtung 20. Diese Befestigungseinrichtung 20 weist, wie oben erwähnt, den Hebel 28 auf, der eine Drehung eines Eingriffsmittels 17 bewirkt. An diesem Eingriffsmittel 17 sind zwei sich in radialer Richtung erstreckende Vorsprünge 17a und 17b angeordnet, welche zum Arretieren des Trägerschalenteils in entsprechende Eingriffsmittel bzw. Ausnehmungen 18a, 18b des Befestigungselements 18 (d.h. des Bajonetts) eingreifen. Sowohl das Eingriffsmittel 17 als auch das Befestigungselement sind damit Bestandteile der Befestigungseinrichtung. Gleiches gilt auch für das Federelement 14.

Das Bezugszeichen 24 kennzeichnet eine Oberfläche des Blasformträgerteils, welche mit der Oberfläche 16 (vgl. Fig. 5) des Trägerschalenteils 4a, 4b zusammenwirkt, um auf diese Weise das Druckkissen auszubilden.

Das Bezugszeichen 33 bezieht sich dabei auf eine umlaufende Dichtungseinrichtung, mittels derer gegenüber der Oberfläche 16 abgedichtet werden kann. Auf diese Weise kann das Druckkissen aufgebaut werden.

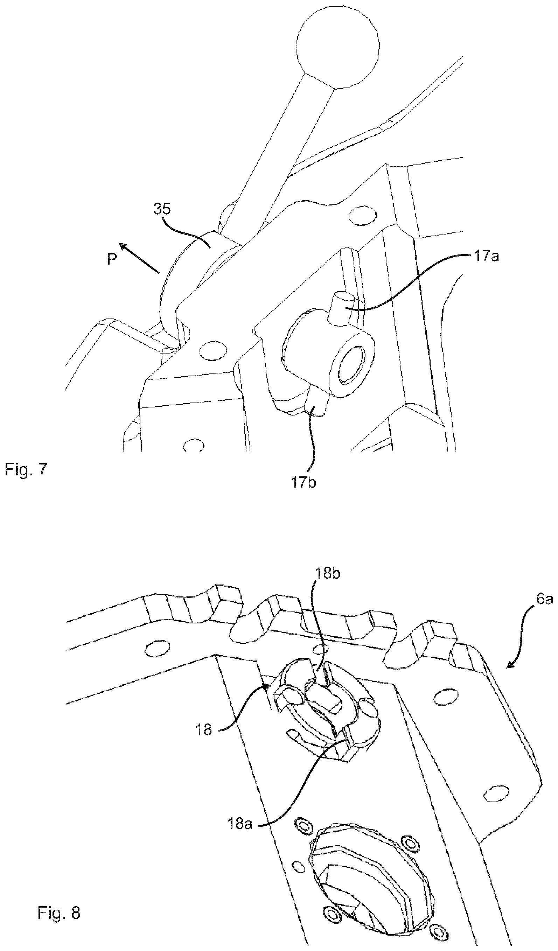

Fig. 7 zeigt eine vergrößerte Darstellung des in Fig. 6 gezeigten Blasformträgerteils. Die in Fig. 2 gezeigte Rückstelleinrichtung bzw. Feder ist hier nicht dargestellt, liegt jedoch zwischen der Wandung des Blasformträgerteils und dem Grundkörper 35 der Betätigungseinrichtung 20 an. Auf diese Weise wird hier die Betätigungseinrichtung durch das Federelement in Fig. 7 entlang des Pfeils P gedrückt. Auf diese Weise wird jedoch auch die (nicht gezeigte) Blasformträgerschale auf den Blasformträger 8a zugestellt bzw. im Arbeitsprozess nach der Beendigung der Druckbeaufschlagung des Druckkissens wieder zurückgestellt.

Fig. 8 zeigt eine Detaildarstellung der Blasformträgerschale 6a. Man erkennt hier wiederum das Eingriffselement 18. Dieses Eingriffselement 18 weist hier zwei Nuten 18a und 18b auf, in welche die beide Vorsprünge 17a und 17b (vgl. Fig. 7) eingreifen. Durch ein Drehen des Hebels 28 können auf diese Weise die Blasformträgerschale 6a und das Blasformträgerteil 8a näher aneinander gezogen werden. Auf diese Weise wird die Arretierung ermöglicht.

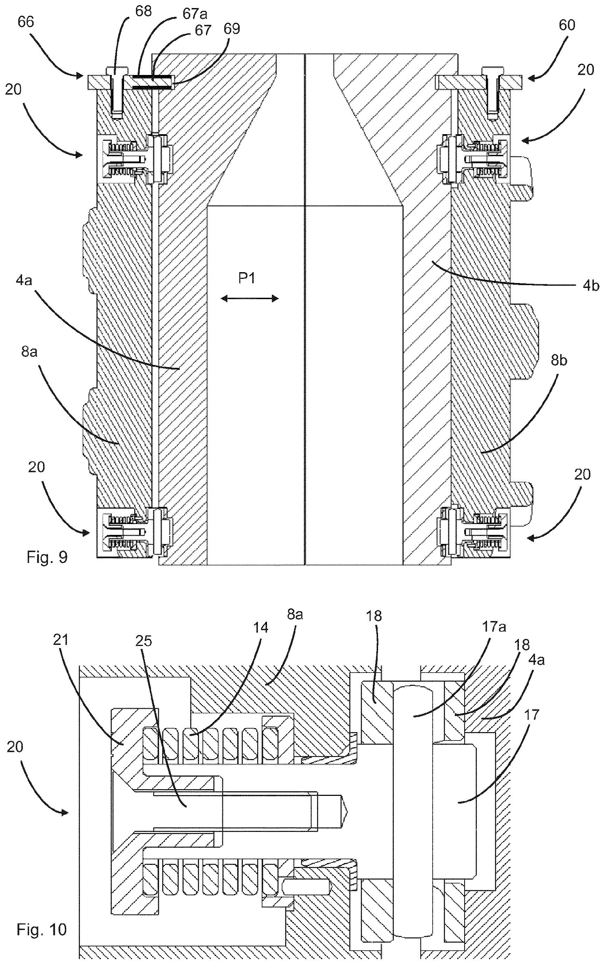

Fig. 9 zeigt eine Darstellung zweier an Blasformträgerteilen 8a, 8b angeordneter Seitenteile 4a, 4b. Dabei bezieht sich das Bezugszeichen 20 jeweils auf die Befestigungseinrichtung, welche die Seitenteile 4a, 4b unmittelbar an den Blasformträgerteilen 8a, 8b hält. Damit ist bei der in Fig. 9 gezeigten Ausführungsform keine Blasformträgerschale vorgesehen, welche zwischen den Blasformträgerteilen 8a, 8b und den Seitenteilen 4a, 4b angeordnet ist.

Das Bezugszeichen 66 bezieht sich auf einen weiteren Führungsmechanismus, der eine Bewegung des Seitenteils 4a gegenüber dem Blasformträgerteil 8a in der Richtung P1 führt. Dieser Führungsmechanismus 66 ist einerseits über ein Befestigungsmittel 68 an dem Blasformträgerteil 8a angeordnet, z.B. angeschraubt. Andererseits weist dieser Führungsmechanismus 46 einen sich hier in der Richtung P1, d.h. in einer radialen Richtung erstreckenden Vorsprung 67 auf. An diesem Vorsprung 67, der in eine an dem Blasformteil 4a angeordnete Ausnehmung 69 eingreift, ist eine Gleitschicht 67a angeordnet, welche eine leichtgängige Bewegung des Blasformteils 4a gegenüber dem Blasformträgerteil 8a ermöglicht. Damit ist hier das linke Blasformteil 4a in Richtung des Pfeils P1 beweglich gegenüber dem Blasformträgerteil 8a angeordnet.

Das zweite Seitenteil 4b ist starr an dem ihm zugeordneten Blasformträgerteil 8b angeordnet. Anstelle eines Führungsmechanismus ist hier ein Sicherungsmechanismus 60 vorgesehen, der zusätzlich zu der Befestigungseinrichtung 20 das Blasformseitenteil 4b, d.h. das rechte Seitenteil gegenüber dem Blasformträgerteil 8b sichert.

Allgemein ist bevorzugt wenigstens ein Seitenteil 4a, 4b über wenigstens zwei, bevorzugt übereinander angeordnete Befestigungseinrichtungen 20 an dem ihm zugeordneten Blasformträgerteil 8a, 8b angeordnet.

Fig. 10 zeigt eine detaillierte Darstellung einer Befestigungseinrichtung 20. Dabei ist das Eingriffselement 18 in Form einer Bajonetthülse fest an dem jeweiligen Seitenteil 4a angeschraubt. Durch das Drehen einer Einstellmutter 21 gleiten die Eingriffsmittel bzw. Zylinderstifte entlang der Führungsfläche der Bajonetthülse 18. Auf diese Weise wird eine Vorspannung des Federelements 14 erzeugt, welche das Seitenteil 4a an das Blasformträgerteil 8a zieht. Auf diese Weise kommt es zu einer lösbaren Anbindung zwischen dem Seitenteil 4a und dem Blasformträgerteil 8a, wobei die Anbindungskraft durch die Vorspannung des Federelements 14 definiert ist. Über eine Schraube 25 kann diese Anbindungskraft variiert werden.

Im Arbeitsbetrieb wird durch eine Betätigung des Druckkissens die Federkraft überwunden und das Seitenteil 4a führt eine horizontale Bewegung in Richtung des Mittelpunkts der Blasstation aus, um den Formspalt mit dem jeweils anderen Seitenteil zu minimieren. Nach einem Entlasten des Druckkissens holt das Federelement 14 das Seitenteil auf die ursprüngliche Position zurück.

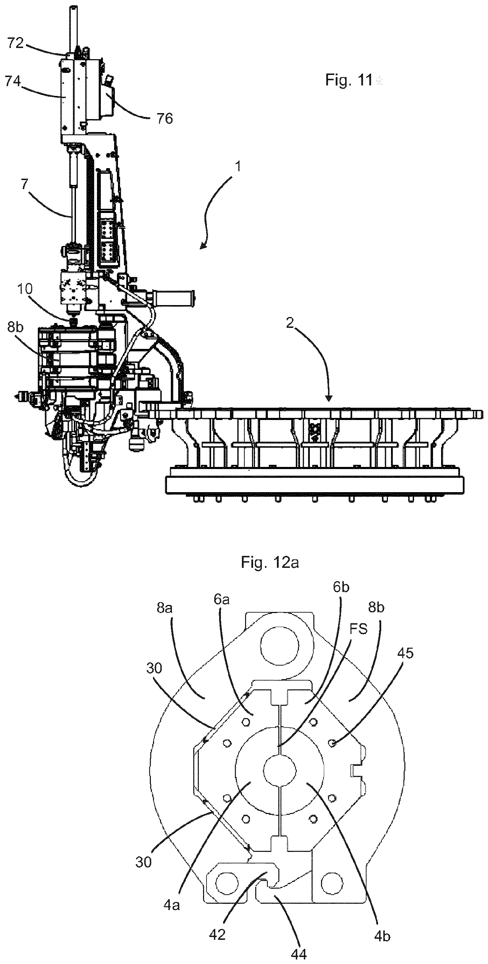

Fig. 11 zeigt eine weitere Darstellung einer an einem Träger 2 wie insbesondere einem Blasrad angeordneten Umformungseinrichtung 1. Dabei kennzeichnet das Bezugszeichen 10 wieder einen Kunststoffvorformling und das Bezugszeichen 7 eine Reckstange, die zum Dehnen der Kunststoffvorformlinge in deren Längsrichtung dient. Das Bezugszeichen 72 kennzeichnet eine Antriebseinrichtung wie insbesondere einen Linearmotor, der eine Bewegung der Reckstange in der Längsrichtung der Kunststoffvorformlinge 10 erzeugt. Das Bezugszeichen 72 kennzeichnet eine Kühleinrichtung zum Kühlen der Antriebseinrichtung 72 und das Bezugszeichen 76 eine Steuerungseinrichtung zum Steuern der Antriebseinrichtung, wie insbesondere aber nicht ausschließlich einen Umrichter.

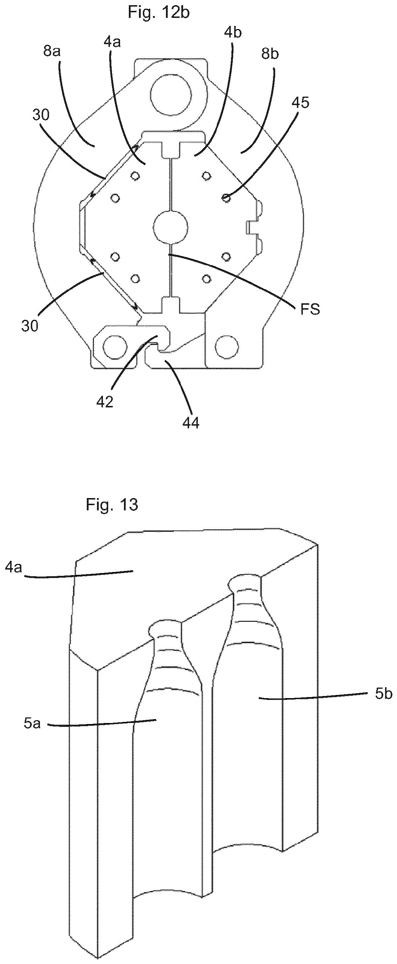

Die Fig. 12a, 12b zeigen zwei mögliche Ausgestaltungen von an einem Blasformträger angeordneten Blasformeinrichtungen. Bei der in Fig. 12a gezeigten Ausführungsform sind die Blasformteile 4a, 4b jeweils über Blasformträgerschalen 6a, 6b an den Blasformträgerteilen 8a, 8b angeordnet. Ein bzw. mehrere Druckkissen 30 sind hier zwischen dem Blasformträgerteil 8a und dem an diesem Blasformträgerteil 8a angeordneten Blasformträgerschalenteil 6a ausgebildet. Weiterhin sind Temperierbohrungen 45 in den Blasformträgerschalenteilen 6a, 6b vorgesehen, durch welche ein fließfähiges Temperiermedium strömen kann.

Bei der in Fig. 12b gezeigten Ausführungsform ist die Blasform bzw. sind die Seitenteile 4a, 4b der Blasform unmittelbar an den jeweiligen Blasformträgerteilen 8a, 8b angeordnet. Damit ist hier ein Druckkissen 30 unmittelbar zwischen dem Blasformträgerteil 8a und dem an diesem Blasformträgerteil 8a angeordneten Seitenteil 4a ausgebildet. Das Bezugszeichen 45 kennzeichnet wieder Temperierbohrungen bzw. Kanäle, durch welche ein fließfähiges Temperiermedium strömen kann. Das Bezugszeichen FS kennzeichnet jeweils den Formspalt, der durch das Druckkissen 30 minimiert werden kann. Die Blasform bzw. deren Seitenteile 4a und 4b sind als sogenannte "Vollformen" ausgebildet, die gleichzeitig die Aufgaben der hier fehlenden Formträgerschalen und der eigentlichen Blasform übernehmen. Die Vollformen weisen deshalb auch eine v-förmige Außenkontur, sowie eine entsprechende Druckkissenanordnung auf.

Fig. 13 zeigt eine weitere Darstellung eines Seitenteils 4a. Dieses Seitenteil weist hier zwei Hohlräume zum Ausbilden von Kunststoffflaschen auf. Damit zeigt Fig. 13 eine Doppelkavität, mittels derer (insbesondere im Wesentlichen gleichzeitig) zwei Behältnisse geblasen werden können.

### Bezugszeichenliste

- 1: Umformungseinrichtung
- 2: Träger
- 4a, 4b: Blasformseitenteile
- 5: Hohlraum
- 5a, 5b: Hohlraum
- 6a, 6b: Blasformträgerschalen
- 8a, 8b: Blasformträgerteile
- 10: Kunststoffvorformlinge
- 14: Federelement
- 15: Kunststoffbehältnisse
- 16, 16a: Oberfläche
- 17: Eingriffsmittel
- 17a, 17b: Vorsprünge
- 18: Eingriffselement
- 18a, 18b: Eingriffsmittel
- 20: Befestigungseinrichtung
- 21: Einstellmutter
- 23a, 23b: Zuführöffnungen
- 24: Oberfläche
- 25: Schraube
- 28: Hebel
- 30: Druckkissen
- 32, 34: Anschlüsse
- 33: umlaufende Dichtungseinrichtung
- 35: Grundkörper
- 36: Zuführanschluss
- 42: erstes Verriegelungselement
- 44: weiteres Verriegelungselement
- 48: Führungseinheit
- 49: Drossel
- 50: Anlage
- 52: Zuführstern
- 54: Abführstern
- 60: Sicherungsmechanismus
- 66: Führungsmechanismus
- 67: Vorsprung
- 67a: Gleitschicht
- 68: Befestigungsmittel
- 69: Ausnehmung
- 72: Antriebseinrichtung
- 74: Kühleinrichtung
- 76: Steuerungseinrichtung
- D: Drehachse
- E: Ebene
- P: Pfeil
- P1: Bewegungsrichtung

## Patentansprüche

1. Umformungseinrichtung (1) zum Umformen von Kunststoffvorformlingen (10) zu Kunststoffbehältnissen (15), mit einer Blasformeinrichtung (4), welche einen Hohlraum (5) ausbildet, innerhalb dessen die Kunststoffvorformlinge (10) durch Beaufschlagung mit einem fließfähigen Medium zu den Kunststoffbehältnissen (15) umformbar sind, wobei die Blasformeinrichtung (4) wenigstens zwei Seitenteile (4a, 4b) aufweist, welche zumindest mittelbar an Blasformträgern (8a, 8b) angeordnet sind, wobei an den Blasformträgern (8a, 8b) mittels einer Befestigungseinrichtung (20) die Seitenteile (4a, 4b) zumindest mittelbar angeordnet sind, wobei die Befestigungseinrichtung (20) auch ein Rückstellmittel (14) aufweist, welches wenigstens zeitweise während eines Arbeitsbetriebs wenigstens ein Seitenteil (4a, 4b) in Richtung desjenigen Blasformträgers (8a, 8b), an dem dieses Seitenteil (4a, 4b) angeordnet ist, drängt,
**dadurch gekennzeichnet, dass**
die Befestigungseinrichtung (20) ein bajonettartiges Befestigungselement (18) zum Befestigen des Blasformteils (4a, 4b) an dem Blasformträgerteil (8a, 8b) aufweist.

2. Umformungseinrichtung (1) nach Anspruch 1,
**dadurch gekennzeichnet, dass**
die Umformungseinrichtung (1) eine Zustelleinrichtung (30) aufweist, welche dazu geeignet und bestimmt ist, um wenigstens zeitweise vor oder während eines Umformungsvorgangs ein Seitenteil (4a, 4b) in Richtung des anderen Seitenteils (4b, 4a) zuzustellen.

3. Umformungseinrichtung nach Anspruch 2,
**dadurch gekennzeichnet, dass**
die Zustelleinrichtung (30) in wenigstens einem Zwischenraum zwischen dem Blasformträger (8a, 8b) und dem diesem zugeordneten Seitenteil (4a, 4b) einen mit einem fließfähigen Medium beaufschlagbaren Aufnahmeraum aufweist, durch dessen Beaufschlagung der Blasformträger (8a, 8b) und das ihm zugeordnete Seitenteil (4a, 4b) auseinander drängbar sind.

4. Umformungseinrichtung nach wenigstens einem der vorangegangenen Ansprüche
**dadurch gekennzeichnet, dass**
die Befestigungseinrichtung (20) in einem Arbeitsbetrieb der Umformungseinrichtung ein mechanisches Spiel zwischen dem Blasformträger (8a, 8b) und dem an diesem Blasformträger (8a, 8b) angeordneten Blasformteil (4a, 4b) ermöglicht

5. Umformungseinrichtung nach wenigstens einem der vorangegangenen Ansprüche,
**dadurch gekennzeichnet, dass**
an den Blasformträgern (8a, 8b) mittels der Befestigungseinrichtung (20) Blasformträgerschalen (6a, 6b) befestigt sind und an diesen Blasformträgerschalen (6a, 6b) die Seitenteile (4a, 4b) angeordnet sind wobei das Rückstellmittel bevorzugt wenigstens eine Blasformträgerschale in Richtung desjenigen Blasformträgers (8a, 8b), an dem diese Blasformträgerschale (6a, 6b) angeordnet ist, drängt.

6. Umformungseinrichtung nach wenigstens einem der vorangegangenen Ansprüche,
**dadurch gekennzeichnet, dass**
wenigstens eine Blasformträgerschale (6a, 6b) eine dem dieser Blasformträgerschale (6a, 6b) zugeordneten Blasformträger (8a, 8b) zugewandte erste Oberfläche (16) sowie eine diesem Blasformträger (6a, 6b) zugewandte zweite Oberfläche (16a) aufweist und sowohl die erste Oberfläche (16) als auch die zweite Oberfläche (16a) jeweils ein Druckkissen abschnittsweise begrenzen.

7. Umformungseinrichtung nach wenigstens einem der vorangegangenen Ansprüche,
**dadurch gekennzeichnet, dass**
wenigstens ein Rückstellmittel (14) ein Federelement (14) aufweist.

8. Umformungseinrichtung nach Anspruch 7,
**dadurch gekennzeichnet, dass**
das Federelement (14) vorgespannt ist, um das Blasformteil (4a, 4b) und/oder die Blasformträgerschale (6a, 6b) auf das Blasformträgerteil (8a, 8b) zuzuspannen.

9. Umformungseinrichtung nach wenigstens einem der vorangegangenen Ansprüche,
**dadurch gekennzeichnet, dass**
die Blasformträgerschale (6a, 6b) form- und kraftschlüssig an dem Blasformträger (8a, 8b) gehalten ist und/oder die Blasformträgerschale (6a, 6b) auch das Blasformteil (4a, 4b) form- und kraftschlüssig hält.

10. Umformungseinrichtung nach wenigstens einem der vorangegangenen Ansprüche,
**dadurch gekennzeichnet, dass**
wenigstens eine Blasformträgerschale (6a, 6b) Kanäle zum Leiten eines Temperiermediums aufweist.

11. Umformungseinrichtung nach wenigstens einem der vorangegangenen Ansprüche,
**dadurch gekennzeichnet, dass**
an wenigstens einer Blasformträgerschale wenigstens ein Kraftumlenkungselement angeordnet ist, welches während eines Umformungsprozesses auftretende Kräfte, insbesondere Axialkräfte an den dieser Blasformträgerschale (6a, 6b) zugeordneten Blasformträger (8a, 8b) ableitet.

12. Umformungseinrichtung nach wenigstens einem der vorangegangenen Ansprüche,
**dadurch gekennzeichnet, dass**
wenigstens eine Formträgerschale (6a, 6b) an einer ersten Seite eine V-förmige Kontur aufweist und an einer zweiten Seite, welche der ersten Seite gegenüberliegt, eine gekrümmte Kontur.

13. Verfahren zum Umformen von Kunststoffvorformlingen (10) zu Kunststoffbehältnissen (15), wobei mittels einer Blasformeinrichtung (4), welche einen Hohlraum ausbildet, die Kunststoffvorformlinge (10) innerhalb dieses Hohlraums durch Beaufschlagung mit einem fließfähigen Medium zu den Kunststoffbehältnissen (15) umgeformt werden, wobei die Blasformeinrichtung (4) wenigstens zwei Seitenteile (4a, 4b) aufweist, welche zumindest mittelbar an Blasformträgern (8a, 8b) angeordnet sind, wobei an den Blasformträgern (8a, 8b) (6a, 6b) die Seitenteile (4a, 4b) angeordnet sind, wobei die Befestigungseinrichtung (20) auch ein Rückstellmittel (14) aufweist, welches wenigstens zeitweise während eines Arbeitsbetriebs wenigstens ein Seitenteil in Richtung desjenigen Blasformträgers (8a, 8b), an dem dieses Seitenteil (4a, 4b) angeordnet ist, drängt,
**dadurch gekennzeichnet, dass**
die Befestigungseinrichtung (20) ein bajonettartiges Befestigungselement (18) aufweist, mit dem das Blasformteil (4a, 4b) an dem Blasformträgerteil (8a, 8b) befestigt wird.

## Claims

1. Transforming device (1) for transforming plastic preforms (10) into plastic containers (15), comprising a blow-moulding device (4) which forms a cavity (5) inside which the plastic preforms (10) can be transformed into the plastic containers (15) through the application of a flowable medium, wherein the blow-moulding device (4) has at least two side parts (4a, 4b) which are arranged at least indirectly on blow-mould carriers (8a, 8b), wherein the side parts (4a, 4b) are arranged at least indirectly on the blow-mould carriers (8a, 8b) by means of an attachment device (20), wherein the attachment device (20) also has a return means (14) which, at least temporarily during a working mode, pushes at least one side part (4a, 4b) towards the blow-mould carrier (8a, 8b) on which said side part (4a, 4b) is arranged,
**characterized in that**
the attachment device (20) has a bayonet-type attachment element (18) for attaching the blow-moulded part (4a, 4b) to the blow-mould carrier part (8a, 8b).

2. Transforming device (1) according to claim 1,
**characterized in that**
the transforming device (1) has an advancing device (30) which is suitable and intended for pushing one side part (4a, 4b) towards the other side part (4b, 4a) at least temporarily before or during a transforming operation.

3. Transforming device according to claim 2,
**characterized in that**
the advancing device (30) has, in at least one intermediate space between the blow-mould carrier (8a, 8b) and the side part (4a, 4b) assigned thereto, a receiving chamber to which a flowable medium can be applied, as a result of the application of which the blow-mould carrier (8a, 8b) and the side part (4a, 4b) assigned thereto can be pushed apart.

4. Transforming device according to at least one of the preceding claims ,
**characterized in that**
the attachment device (20), in a working mode of the transforming device, allows mechanical play between the blow-mould carrier (8a, 8b) and the blow-mould part (4a, 4b) arranged on said blow-mould carrier (8a, 8b).

5. Transforming device according to at least one of the preceding claims ,
**characterized in that**
blow-mould carrier shells (6a, 6b) are attached to the blow-mould carriers (8a, 8b) by means of the attachment device (20) and the side parts (4a, 4b) are arranged on said blow-mould carrier shells (6a, 6b), wherein the return means preferably pushes at least one blow-mould carrier shell towards the blow-mould carrier (8a, 8b) on which said blow-mould carrier shell (6a, 6b) is arranged.

6. Transforming device according to at least one of the preceding claims ,
**characterized in that**
at least one blow-mould carrier shell (6a, 6b) has a first surface (16) facing towards the blow-mould carrier (8a, 8b) assigned to said blow-mould carrier shell (6a, 6b) and a second surface (16a) facing towards said blow-mould carrier (6a, 6b), and both the first surface (16) and the second surface (16a) each partially delimit a pressure cushion.

7. Transforming device according to at least one of the preceding claims ,
**characterized in that**
at least one return means (14) comprises a spring element (14).

8. Transforming device according to claim 7,
**characterized in that**
the spring element (14) is preloaded to push the blow-mould part (4a, 4b) and/or the blow-mould carrier shell (6a, 6b) towards the blow-mould carrier part (8a, 8b).

9. Transforming device according to at least one of the preceding claims ,
**characterized in that**
the blow-mould carrier shell (6a, 6b) is held on the blow-mould carrier (8a, 8b) in a form-fitting and force-fitting manner and/or the blow-mould carrier shell (6a, 6b) also holds the blow-mould part (4a, 4b) in a form-fitting and force-fitting manner.

10. Transforming device according to at least one of the preceding claims ,
**characterized in that**
at least one blow-mould carrier shell (6a, 6b) has channels for conducting a temperature control medium.

11. Transforming device according to at least one of the preceding claims ,
**characterized in that**
there is arranged on at least one blow-mould carrier shell at least one force-deflecting element which diverts away any forces occurring during a transformation process, in particular axial forces on the blow-mould carrier (8a, 8b) assigned to said blow-mould carrier shell (6a, 6b).

12. Transforming device according to at least one of the preceding claims ,
**characterized in that**
at least one mould carrier shell (6a, 6b) has a V-shaped contour on a first side and a curved contour on a second side located opposite the first side.

13. Method for transforming plastic preforms (10) into plastic containers (15), wherein, by means of a blow-moulding device (4) which forms a cavity (5), the plastic preforms (10) are transformed into the plastic containers (15) inside said cavity through the application of a flowable medium, wherein the blow-moulding device (4) has at least two side parts (4a, 4b) which are arranged at least indirectly on blow-mould carriers (8a, 8b), wherein the side parts (4a, 4b) are arranged on the blow-mould carriers (8a, 8b) (6a, 6b), wherein the attachment device (20) also has a return means (14) which, at least temporarily during a working mode, pushes at least one side part towards the blow-mould carrier (8a, 8b) on which said side part (4a, 4b) is arranged,
**characterized in that**
the attachment device (20) has a bayonet-type attachment element (18) for attaching the blow-moulded part (4a, 4b) to the blow-mould carrier part (8a, 8b).

## Revendications

1. Dispositif de façonnage (1) servant à façonner des préformes en plastique (10) en des récipients en plastique (15), comprenant un dispositif de moulage par soufflage (4), qui réalise une cavité (5), à l'intérieur de laquelle les préformes en plastique (10) peuvent être façonnées en des récipients en plastique (15) du fait de l'exposition à l'action exercée par un milieu pouvant s'écouler, dans lequel le dispositif de moulage par soufflage (4) présente au moins deux parties latérales (4a, 4b), qui sont disposées au moins indirectement au niveau de supports de moule de soufflage (8a, 8b), dans lequel les parties latérales (4a, 4b) sont disposées au moins indirectement au niveau des supports de moule de soufflage (8a, 8b) au moyen d'un dispositif de fixation (20), dans lequel le dispositif de fixation (20) présente également un moyen de rappel (14), qui pousse au moins par intermittence au cours d'un mode de fonctionnement au moins une partie latérale (4a, 4b) en direction du support de moule de soufflage (8a, 8b), au niveau duquel précisément ladite partie latérale (4a, 4b) est disposée,
**caractérisé en ce que**
le dispositif de fixation (20) présente un élément de fixation (18) de type baïonnette servant à fixer la partie de moule de soufflage (4a, 4b) au niveau de la partie de support de moule de soufflage (8a, 8b).

2. Dispositif de façonnage (1) selon la revendication 1,
**caractérisé en ce que**
le dispositif de façonnage (1) présente un dispositif de rapprochement (30), qui est adapté et défini pour rapprocher au moins par intermittence, avant ou pendant une opération de façonnage, une partie latérale (4a, 4b) en direction de l'autre partie latérale (4b, 4a).

3. Dispositif de façonnage selon la revendication 2,
**caractérisé en ce que**
le dispositif de rapprochement (30) présente, dans au moins un espace intermédiaire entre le support de moule de soufflage (8a, 8b) et la partie latérale (4a, 4b) qui lui est associée, un espace de réception pouvant être soumis à l'action d'un milieu pouvant s'écouler, par la sollicitation duquel espace de réception le support de moule de soufflage (8a, 8b) et la partie latérale (4a, 4b) qui lui est associée peuvent être poussés l'un de l'autre.

4. Dispositif de façonnage selon au moins l'une quelconque des revendications précédentes,
**caractérisé en ce que**
le dispositif de fixation (20) permet, dans un mode de fonctionnement du dispositif de façonnage, un jeu mécanique entre le support de moule de soufflage (8a, 8b) et la partie de moule de soufflage (4a, 4b) disposée au niveau dudit support de moule de soufflage (8a, 8b).

5. Dispositif de façonnage selon au moins l'une quelconque des revendications précédentes,
**caractérisé en ce que**
des coques de support de moule de soufflage (6a, 6b) sont fixées au niveau des supports de moule de soufflage (8a, 8b) au moyen du dispositif de fixation (20) et les parties latérales (4a, 4b) sont disposées au niveau desdites coques de support de moule de soufflage (6a, 6b), dans lequel le moyen de rappel pousse de manière préférée au moins une coque de support de moule de soufflage en direction du support de moule de soufflage (8a, 8b), au niveau duquel précisément ladite coque de support de moule de soufflage (6a, 6b) est disposée.

6. Dispositif de façonnage selon au moins l'une quelconque des revendications précédentes,
**caractérisé en ce que**
au moins une coupe de support de moule de soufflage (6a, 6b) présente une première surface (16) tournée vers le support de moule de soufflage (8a, 8b) associé à ladite coque de support de moule de soufflage (6a, 6b) ainsi qu'une deuxième surface (16a) associée audit support de moule de soufflage (6a, 6b) et aussi bien la première surface (16) que la deuxième surface (16a) délimitent par endroits respectivement un coussin de pression.

7. Dispositif de façonnage selon au moins l'une quelconque des revendications précédentes,
**caractérisé en ce que**
au moins un moyen de rappel (14) présente un élément de ressort (14).

8. Dispositif de façonnage selon la revendication 7,
**caractérisé en ce que**
l'élément de ressort (14) est précontraint afin de serrer la partie de moule de soufflage (4a, 4b) et/ou la coque de support de moule de soufflage (6a, 6b) sur la partie de support de moule de soufflage (8a, 8b).

9. Dispositif de façonnage selon au moins l'une quelconque des revendications précédentes,
**caractérisé en ce que**
la coque de support de moule de soufflage (6a, 6b) est maintenue par complémentarité de forme et à force au niveau du support de moule de soufflage (8a, 8b), et/ou la coque de support de moule de soufflage (6a, 6b) maintient par complémentarité de forme et à force également la partie de moule de soufflage (4a, 4b).

10. Dispositif de façonnage selon au moins l'une quelconque des revendications précédentes,
**caractérisé en ce que**
au moins une coque de support de moule de soufflage (6a, 6b) présente des canaux servant à acheminer un milieu de régulation de température.

11. Dispositif de façonnage selon au moins l'une quelconque des revendications précédentes,
**caractérisé en ce que**
au moins un élément de déviation de force est disposé au niveau d'au moins une coque de support de moule de soufflage, lequel dévie, pendant un processus de façonnage, des forces qui apparaissent, en particulier des forces axiales au niveau du support de moule de soufflage (8a, 8b) associé à ladite coque de support de moule de soufflage (6a, 6b).

12. Dispositif de façonnage selon au moins l'une quelconque des revendications précédentes,
**caractérisé en ce que**
au moins une coque de support de moule (6a, 6b) présente au niveau d'un premier côté un contour en forme de V et au niveau d'un deuxième côté, qui fait face au premier côté, un contour incurvé.

13. Procédé servant à façonner des préformes en plastique (10) en des récipients en plastique (15), dans lequel les préformes en plastique (10) sont façonnées en des récipients en plastique (15) au moyen d'un dispositif de moulage de soufflage (4), qui réalise une cavité, à l'intérieur de ladite cavité par l'exposition à l'action exercée par un milieu pouvant s'écouler, dans lequel le dispositif de moulage de soufflage (4) présente au moins deux parties latérales (4a, 4b), qui sont disposées au moins indirectement au niveau de supports de moule de soufflage (8a, 8b), dans lequel les parties latérales (4a, 4b) sont disposées au niveau des supports de moule de soufflage (8a, 8b) (6a, 6b), dans lequel le dispositif de fixation (20) présente également un moyen de rappel (14), qui pousse au moins par intermittence pendant un mode de fonctionnement au moins une partie latérale en direction du support de moule de soufflage (8a, 8b), au niveau duquel précisément ladite partie latérale (4a, 4b) est disposée,
**caractérisé en ce que**
le dispositif de fixation (20) présente un élément de fixation (18) de type baïonnette, avec lequel la partie de moule de soufflage (4a, 4b) est fixée au niveau de la partie de support de moule de soufflage (8a, 8b).
